# EUROPEAN PATENT APPLICATION

(11) **EP 0 970 832 A1**
(43) Date of publication of application: **12.01.2000**
(21) Application number: 99201770.7
(22) Date of filing: 04.06.1999
(51) Int. Cl.: B60H 1/00, B60J 7/057, B60Q 1/14, G08G 1/0968

(54) **A device for operating peripheral equipment in a vehicle as well as a vehicle comprising same**

(30) Priority: 18.06.1998 NL 1009436
(71) Applicant: MAASLAND N.V., 3155 PD Maasland (NL)
(72) Inventor: van der Lely, Olaf, 6300 Zug (CH)
(74) Representative: Corten, Maurice Jean F.M.

(57) **Abstract**

A device for operating peripheral equipment in a vehicle comprises at least one operating element (1) which can be connected to a collection of peripheral equipment (4 - 8) present in the vehicle, which collection comprises at least two different devices (4 - 8). The operating element (1) is adapted to effect at least one predetermined operating action for each device of the collection (4 - 8). By means of an operating element (1) to be operated by a user a desired combination of operating actions can be carried out simply and quickly.

## Description

The invention relates to a device according to the preamble of claim 1. The invention further relates to a vehicle comprising such a device.

Devices are known in which specific equipment in a motorcar is controlled on the basis of measuring data supplied by a sensor. For example, EP-A-0 499 709 relates to a device in which the air conditioning system of a motorcar is controlled automatically with the aid of various sensors. WO 93-07455 describes a system in which the headlights of a motorcar are controlled automatically with the aid of a light sensor. WO 94-23277 relates to a system in which the head-lights and the air conditioning system of a motorcar are controlled automatically with the aid of sensors. EP-A-0 780 823 discloses a system in which the lights of a vehicle are controlled automatically on the basis of data supplied by a navigation system.

The known devices have inter alia the disadvantage of functioning completely automatically and independently of the requirements of the users of the vehicle.

It is an object of the invention to provide a user-friendly and flexible device operating in a simple and efficient manner. According to the invention this is achieved by the measures indicated in the characterizing part of claim 1. By means of the operating element (i.e. an element that can be operated by a user) the user can carry out simply and quickly the desired combination of operating actions.

In accordance with an inventive feature, the composition of the collection can be set and/or programmed. For example, the user can select him/herself which equipment he or she wishes to operate with the aid of the operating element. According to a further inventive feature, the nature and/or the moments of the operating actions can be set and/or programmed. In this manner, the user can define his/her preferred setting(s) for keys representing specific combinations of operating actions for the peripheral equipment in his/her vehicle.

According to another inventive feature, the operating element can be operated by hand. This is a simple and reliable embodiment. According to a further inventive feature, the operating element can be operated by means of an acoustical signal or a human voice. This enhances the ease of operation.

According to a further inventive feature, the operating element can be connected to a control unit which is connected to the collection of peripheral equipment and to a positioning system for the vehicle, such as e.g. GPS, in which the operating element can be set in such a manner that for each device of the collection the predetermined operating actions pertaining thereto are effected automatically by means of the control unit at moments established on the basis of data supplied by the positioning system. As a result of the connection with the positioning system the user can set the operating element in such a manner that the desired operating actions are effected automatically at the right moments (established by the positioning system).

In accordance with a still further inventive feature, the collection of peripheral equipment of the vehicle comprises lights and/or window operating means and/or sliding roof operating means and/or roof operating means and/or sun protection means and/or ventilation means and/or an air conditioning system and/or an audio system. According to another inventive feature, the operating element is adapted to cancel, by being operated a next time, the most recently effected operating actions. This makes it possible for the user to restore the previous state of the peripheral equipment in a simple manner.

According to again another inventive feature, the device is provided with memory means for storing the current settings of the peripheral equipment. According to a further inventive feature, operating the operating element only effects those predetermined operating actions that result in settings of the peripheral equipment not corresponding to the current settings. According to a still further inventive feature, the operating element is adapted to restore, by being operated a next time, the settings of the peripheral equipment stored at the last operating of the operating element.

In a preferred embodiment of the invention, the composition of the collection and the nature of the operating actions are set and/or programmed in such a manner that the operating element and/or the control unit is/are adapted to adjust the settings of the peripheral equipment of the vehicle to driving in a tunnel or a parking garage and to cancel the adjustment. In this manner it is possible to realize very simply and quickly (with one single operating element or fully automatically by means of the control unit) a number of settings that are necessary or desirable for tunnels or parking garages.

In accordance with a further inventive feature, the collection comprises the lights and the operating action pertaining thereto is switching on the dipped lights, switching them off respectively. According to a still further inventive feature, the collection comprises the window operating means and the operating action pertaining thereto is closing the windows, reopening them respectively. According to another inventive feature, the collection comprises the (sliding) roof operating means and the operating action pertaining thereto is closing the (sliding) roof, reopening it respectively. According to another inventive feature, the collection comprises the sun protection means and the operating action pertaining thereto is closing them, reopening them respectively. According to again another inventive feature, the collection comprises the ventilation means and/or the air conditioning system and the operating action pertaining thereto is closing inlet openings for outside air and/or switching on an internal air circulation in the vehicle, cancelling said actions respectively.

According to a still further inventive feature, the collection comprises the audio system. According to another inventive feature, the operating action pertaining thereto is switching off the radio, switching it on respectively. According to a further inventive feature, the device is provided with a radio signal detector which is suitable for determining the current intensity of a radio signal. According to again another inventive feature, the operating action pertaining thereto is switching off the radio when the intensity of the radio signal is below a specific limit, switching it on respectively when the intensity of the radio signal is above a specific limit. According to a further inventive feature, the operating action pertaining thereto is tuning to a sufficiently strong radio signal, retuning to the previously set radio signal respectively.

In accordance with a further inventive feature, when the operating element is set in such a manner that the operating actions are effected automatically by means of the control unit at moments established on the basis of data supplied by the positioning system, the adjustment of the settings of the peripheral equipment to driving in a tunnel or a parking garage takes place upon approaching, respectively after leaving said tunnel or parking garage. As a result of this the automatic adjustment is made in time.

According to another inventive feature, when the operating element is set in such a manner that the operating actions are effected automatically by means of the control unit at moments established on the basis of data supplied by the positioning system, the settings of the peripheral equipment, adjusted to driving in a tunnel or a parking garage, are maintained as long as, on the basis of the current speed of the vehicle, reaching a next tunnel is expected within a specific period of time. In this manner the settings are prevented from being changed each time in the situation of tunnels that are located at a short distance from each other.

In accordance with a further inventive feature, when the operating element is set in such a manner that the operating actions are effected automatically by means of the control unit at moments established on the basis of data supplied by the positioning system, the control unit is adapted to restore the settings of the peripheral equipment, which were applied before reaching the tunnel or parking garage. In this manner, after leaving the tunnel or parking garage, the right settings are resumed automatically. According to again another inventive feature, the operating element is constituted by the ignition lock of the vehicle. Because of this, when starting the vehicle, a number of desired settings can be carried out immediately.

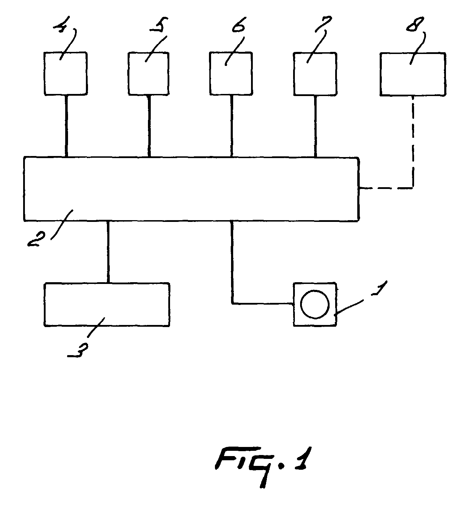

The invention will now be explained in further detail with reference to the accompanying drawing showing a diagram of an embodiment of the device according to the invention. The operating element 1 is connected to the control unit 2 which is further connected to a GPS positioning system 3 for the vehicle and to a collection of peripheral equipment in the vehicle. In the embodiment shown the collection of peripheral equipment comprises the lights 4 of the vehicle, the window operating means 5, the sliding roof operating means 6, the air conditioning system 7 and the audio system 8. The user has programmed the control unit 2 in such a manner that the audio system 8 (for this reason indicated by dotted lines) is not operated by the control unit 2.

Furthermore the control unit 2 is programmed by the user in such a manner that upon approaching a tunnel or a parking garage the peripheral equipment 4 - 7 obtains automatically a number of predetermined settings. The approach of a tunnel or a parking garage is determined by the positioning system 3 which supplies a signal to the control unit 2 which then effects the predetermined operating actions in the peripheral equipment 4 - 7. The dipped lights are switched on, the windows and the sliding roof are closed, and in the air conditioning 7 system an internal air circulation is switched on. Upon leaving the tunnel or the parking garage, the control unit 2 again receives a relevant signal from the positioning system 3, whereupon the settings of the peripheral equipment 4 - 7, applied before reaching the tunnel or parking garage, are restored.

The control unit 2 may be designed as an integrated circuit (i.c.). The operating element 1 may be designed as a simple push button by means of which the control unit 2 can be activated to carry out the programmed operating actions at the moments established by the positioning system 3. By pushing again the operating button 1, the control unit 2 is activated again. The operating element 1 may also be designed such that it can be switched into a position 'AUTOMATICALLY' (in which the control unit 2 and the positioning system 3 are activated as described above) and into a position "HAND OPERATION" (in which the control unit 2, upon operating the operating element 1, immediately effects the operating actions, independently of the positioning system 3).

## Claims

1. A device for operating peripheral equipment in a vehicle, characterized in that the device comprises at least one operating element (1) which can be connected to a collection of peripheral equipment (4 - 8) present in the vehicle, which collection comprises at least two different devices (4 - 8), the operating element (1) being adapted to effect at least one predetermined operating action for each device of the collection (4 - 8).

2. A device as claimed in claim 1, characterized in that the composition of the collection (4 - 8) can be set and/or programmed.

3. A device as claimed in claim 1 or 2, characterized in that the nature and/or the moments of the operating actions can be set and/or programmed.

4. A device as claimed in any one of claims 1 - 3, characterized in that the operating element (1) can be operated by hand.

5. A device as claimed in any one of claims 1 - 4, characterized in that the operating element (1) can be operated by means of an acoustical signal or a human voice.

6. A device as claimed in any one of claims 1 - 5, characterized in that the operating element (1) can be connected to a control unit (2) which is connected to the collection of peripheral equipment (4 - 8) and to a positioning system (3) for the vehicle, such as e.g. GPS, in which the operating element (1) can be set in such a manner that for each device of the collection (4 - 8) the predetermined operating actions pertaining thereto are effected automatically by means of the control unit (2) at moments established on the basis of data supplied by the positioning system (3).

7. A device as claimed in any one of claims 1 - 6, characterized in that the collection of peripheral equipment (4 - 8) of the vehicle comprises lights (4) and/or window operating means (5) and/or sliding roof operating means (6) and/or roof operating means and/or sun protection means and/or ventilation means and/or an air conditioning system (7) and/or an audio system (8).

8. A device as claimed in any one of claims 1 - 7, characterized in that the operating element (1) is adapted, by being operated a next time, to cancel the most recently effected operating actions.

9. A device as claimed in any one of claims 1 - 8, characterized in that the device is provided with memory means for storing the current settings of the peripheral equipment (4 - 8).

10. A device as claimed in any one of claims 1 - 9, characterized in that operating the operating element (1) only effects those predetermined operating actions that result in settings of the peripheral equipment (4 - 8) not corresponding to the current settings.

11. A device as claimed in claim 9 or 10, characterized in that the operating element (1) is adapted, by being operated a next time, to restore the settings of the peripheral equipment (4 - 8) stored at the last operating of the operating element (1).

12. A device as claimed in any one of claims 1 - 11, characterized in that the composition of the collection (4 - 8) and the nature of the operating actions are set and/or programmed in such a manner that the operating element (1) and/or the control unit (2) is/are adapted to adjust the settings of the peripheral equipment (4 - 8) of the vehicle to driving in a tunnel or a parking garage and to cancel the adjustment.

13. A device as claimed in claim 12, characterized in that the collection (4 - 8) comprises the lights (4) and that the operating action pertaining thereto is switching on the dipped lights, switching them off respectively.

14. A device as claimed in claim 12 or 13, characterized in that the collection (4 - 8) comprises the window operating means (5) and that the operating action pertaining thereto is closing the windows, respectively reopening them.

15. A device as claimed in any one of claims 12 - 14, characterized in that the collection (4 - 8) comprises the (sliding) roof operating means (6) and that the operating action pertaining thereto is closing the (sliding) roof, reopening it respectively.

16. A device as claimed in any one of claims 12 - 15, characterized in that the collection (4 - 8) comprises the sun protection means and that the operating action pertaining thereto is closing them, reopening them respectively.

17. A device as claimed in any one of claims 12 - 16, characterized in that the collection (4 - 8) comprises the ventilation means and/or the air conditioning system (7) and that the operating action pertaining thereto is closing inlet openings for outside air and/or switching on an internal air circulation in the vehicle, cancelling said actions respectively.

18. A device as claimed in any one of claims 12 - 17, characterized in that the collection (4 - 8) comprises the audio system (8).

19. A device as claimed in claim 18, characterized in that the operating action pertaining thereto is switching off the radio, switching it on respectively.

20. A device as claimed in claim 18, characterized in that the device is provided with a radio signal detector which is suitable for determining the current intensity of a radio signal.

21. A device as claimed in claim 20, characterized in that the operating action pertaining thereto is switching off the radio when the intensity of the radio signal is below a specific limit, switching it on respectively when the intensity of the radio signal is above a specific limit.

22. A device as claimed in claim 20, characterized in that the operating action pertaining thereto is tuning to a sufficiently strong radio signal, retuning to the previously set radio signal respectively.

23. A device as claimed in claim 6 and any one of claims 12 - 22, characterized in that, when the operating element (1) is set in such a manner that the operating actions are effected automatically by means of the control unit (2) at moments established on the basis of data supplied by the positioning system (3), the adjustment of the settings of the peripheral equipment (4 - 8) to driving in a tunnel or a parking garage takes place upon approaching, respectively after leaving said tunnel or parking garage.

24. A device as claimed in claim 6 and any one of claims 12 - 23, characterized in that, when the operating element (1) is set in such a manner that the operating actions are effected automatically by means of the control unit (2) at moments established on the basis of data supplied by the positioning system (3), the settings of the peripheral equipment (4 - 8), adjusted to driving in a tunnel or a parking garage, are maintained as long as, on the basis of the current speed of the vehicle, reaching a next tunnel is expected within a specific period of time.

25. A device as claimed in claim 6 and any one of claims 12 - 24, characterized in that, when the operating element (1) is set in such a manner that the operating actions are effected automatically by means of the control unit (2) at moments established on the basis of data supplied by the positioning system (3), the control unit (2) is adapted to restore the settings of the peripheral equipment (4 - 8), which were applied before reaching the tunnel or parking garage.

26. A device as claimed in any one of claims 1 - 25, characterized in that the operating element (1) is constituted by the ignition lock of the vehicle. 27. A vehicle comprising a device as claimed in any one of claims 1 - 26.
